(19) Europäisches Patentamt
European Patent Office
Office européen des brevets

(11) EP 2 796 495 B1

# (12) EUROPEAN PATENT SPECIFICATION

(45) Date of publication and mention of the grant of the patent:
**04.07.2018 Bulletin 2018/27**

(21) Application number: **12859865.3**

(22) Date of filing: **07.12.2012**

(51) Int Cl.:
***C08L 23/02*** (2006.01) ***C08J 7/00*** (2006.01)
***C08K 5/49*** (2006.01) ***C08K 5/56*** (2006.01)

(86) International application number:
**PCT/JP2012/081842**

(87) International publication number:
**WO 2013/094437 (27.06.2013 Gazette 2013/26)**

## (54) METHOD OF PRODUCING OLEFIN RESIN COMPOSITION

VERFAHREN ZUR HERSTELLUNG EINER OLEFINHARZZUSAMMENSETZUNG

PROCÉDÉ DE PRÉPARATION DE COMPOSITION DE RÉSINE OLÉFINIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2011 JP 2011278865**

(43) Date of publication of application:
**29.10.2014 Bulletin 2014/44**

(73) Proprietor: **Adeka Corporation**
**Tokyo 116-0012 (JP)**

(72) Inventors:
- **KAWAMOTO, Naoshi**
  **Saitama-shi**
  **Saitama 336-0022 (JP)**
- **URUSHIHARA, Tsuyoshi**
  **Saitama-shi**
  **Saitama 336-0022 (JP)**
- **SEGUCHI, Tetsuya**
  **Saitama-shi**
  **Saitama 336-0022 (JP)**
- **OKAMOTO, Kohei**
  **Saitama-shi**
  **Saitama 336-0022 (JP)**

(74) Representative: **Gill Jennings & Every LLP**
**The Broadgate Tower**
**20 Primrose Street**
**London EC2A 2ES (GB)**

(56) References cited:
**EP-A1- 1 857 468** **EP-A1- 2 392 615**
**EP-A1- 2 682 410** **WO-A1-2011/027793**
**JP-A- H04 348 148** **JP-A- 2000 198 886**
**JP-A- 2006 282 985** **JP-A- 2007 231 036**
**JP-A- 2011 052 177** **JP-A- 2012 107 106**

- **DATABASE WPI Week 200782 Thomson Scientific, London, GB; AN 2007-888066 -& JP 2007 231036 A (IDEMITSU UNITECH CO LTD) 13 September 2007 (2007-09-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 796 495 B1

**Description**

TECHNICAL FIELD

The present invention relates to a method of producing an olefin resin composition. More particularly, the present invention relates to a method of producing an olefin resin composition for a molded article to be used after a sterilization treatment by irradiation with radiation.

BACKGROUND ART

Recently, in the commercial kit products of medical equipments, sanitation products and the like, a production method in which the contents are filled and sealed in a container and then subjected to a sterilization treatment is widely used. As the sterilization treatment, autoclave sterilization, sterilization with ethylene oxide gas or sterilization by irradiation with radiation such as gamma ray or electron beam is employed. However, in autoclave sterilization, since it is performed under a high temperature and a high pressure, the container is required to have excellent heat resistance. In addition, in a sterilization treatment using ethylene oxide gas, it has been pointed out that the residual gas is carcinogenic. Accordingly, the use of these treatment methods is in decline, while the use of gamma ray or electron beam sterilization is attracting attention.

However, polyolefin materials have such problems that they are markedly decomposed and degraded when irradiated with radiation of about 20 kGy (gray), which is normally regarded as a standard sterilization dose, and the mechanical properties such as elongation and impact resistance are thus reduced; and that various additives added for the purpose of stabilizing the polyolefin materials, such as antioxidants, are deteriorated to cause prominent discoloration.

Thus far, for the purpose of solving the problems caused by irradiation with radiation in polyolefin materials, for example, the below-described various polyolefin compositions have been proposed.

In Patent Document 1, it is disclosed to add a specific hindered amine-based light stabilizer having a triazine ring to a polyolefin resin.

Patent Document 2 discloses a polyolefin composition in which a hindered amine compound represented by bis(1-alkyl-2,2,6,6-tetramethyl-4-piperidyl)sebacate is added to a polyolefin.

Patent Document 3 discloses a polypropylene resin composition in which 0.01 to 2 parts by weight of distearyl pentaerythritol diphosphite, which is a phosphorus-based antioxidant, and 0.01 to 2 parts by weight of a hindered amine-based compound are blended with respect to 100 parts by weight of a polypropylene resin.

Patent Document 4 discloses a polypropylene composition in which 0.01 to 0.125 parts by weight of a phosphorus-based antioxidant, 0.01 to 0.1 parts by weight of a hindered amine compound and 0.01 to 0.1 parts by weight of calcium stearate are blended with respect to 100 parts by weight of a polypropylene homopolymer, a propylene-ethylene random copolymer having an ethylene content of 5% by weight or less, or a resin mixture thereof, the polypropylene composition having a melt flow rate of 0.5 to 10g/10 minutes.

Patent Document 5 discloses a resin composition comprising 0.1 to 3.0 parts by weight of 4,4'-thiobis(3-methyl-6-t-butylphenol), which is a sulfur-based antioxidant, and 0.1 to 3.0 parts by weight of 2-(2'-hydroxy-5'-t-octylphenyl)benzotriazole, which is an ultraviolet absorber, with respect to 100 parts by weight of a polyolefin-based resin.

Patent Document 6 discloses a polypropylene resin composition in which an organophosphorus compound selected from monoalkyl acid phosphates, dialkyl acid phosphates and alkyl hydrogen phosphites is blended. In the section of Examples of Patent Document 6, 0.1 parts by mass of a phenolic antioxidant, (tetrakis[methylene-3-(3',5'-di-t-butyl-4-hydroxyphenyl)propionate]methane), is further added and the effect of improving the yellowing after irradiation with radiation is shown.

EP 2682410 A1 discloses a method of producing a laminate film, comprising the step of adding, before or during polymerization of a monomer having an ethylenically unsaturated bond, a phenolic antioxidant represented by a Formula (1), which is masked with an organoaluminum compound, to at least one of a catalyst system, a polymerization system and a piping, such that the phenolic antioxidant is incorporated in an amount of 0.001 to 0.5 parts by mass with respect to 100 parts by mass of a polymer obtained by the polymerization.

WO 2011/027793 A1 and JP 2011052177 disclose methods for industrially, simply and effectively recycling a phenolic body from a phenolic antioxidant which is masked by an organoaluminum compound and contained in an olefin polymer obtained by supplying the masked phenolic antioxidant upon polymerization.

EP 2392615 A1 discloses a polyolefin-based resin composition comprising a polyolefin-based resin obtained by polymerization of an olefin-based monomer with an addition of a phenolic antioxidant represented by a Formula (I). which phenolic antioxidant is masked with an organic aluminum compound, and a phosphorus-based antioxidant to a catalyst system or polymerization system before or during the polymerization of the olefin-based monomer, in which polyolefin-based resin composition, the phenolic antioxidant represented by a Formula (I) and the phosphorus-based antioxidant are added in an amount of 0.001 to 0.5 parts by mass and 0.001 to 3 parts by mass, respectively, with respect

to 100 parts by mass of the olefin-based monomer.

EP 1857468 A1 discloses a method for producing a stabilized polymer comprising adding at least one kind of a phenolic antioxidant masked with an organic aluminum and represented by a general formula (I) in a catalyst system or a polymerization system, before or during polymerization, on gas-phase polymerization of a monomer having an ethylenic unsaturated bonding.

RELATED ART DOCUMENTS

PATENT DOCUMENTS

Patent Document 1: Japanese Unexamined Patent Application Publication No. H5-43745
Patent Document 2: Japanese Unexamined Patent Application Publication No. H07-188472
Patent Document 3: Japanese Unexamined Patent Application Publication No. H5-209095
Patent Document 4: Japanese Unexamined Patent Application Publication No. 2007-231036
Patent Document 5: Japanese Unexamined Patent Application Publication No. H9-12786
Patent Document 6: Japanese Unexamined Patent Application Publication No. 2000-198886

SUMMARY OF THE INVENTION

PROBLEMS TO BE SOLVED BY THE INVENTION

When a polyolefin material is used in a hygiene application for healthcare or food article, there must be no safety concern and, for example, the polyolefin material is required to satisfy the elution standard. In addition, in order to prevent incorrect administration, the contents are required to be visible and the polyolefin material is thus required to have good transparency. In those various polyolefin materials that have been proposed, the effects of improving the reduction in the physical properties and occurrence of yellowing after irradiation with radiation have been shown; however, in a practical sense, these polyolefin materials do not have sufficient elution property and transparency. Furthermore, although the use of a hindered amine compound is proposed in Patent Document 4, a hindered amine skeleton has toxicity and hindered amine compounds are thus often toxic indeed. It is thought to use a low-toxic high-molecular-weight hindered amine compound; however, the use of a high-molecular-weight hindered amine compound has a problem in that the resulting molded article is likely to be whitened and, therefore, a further improvement is required for using such a high-molecular-weight hindered amine compound in a hygiene application for healthcare or food article.

In view of the above, an object of the present invention is to provide a method of producing an olefin resin composition, by which an olefin resin composition in which reduction in the physical properties and occurrence of yellowing after a sterilization treatment by irradiation with radiation are suppressed can be produced.

MEANS FOR SOLVING THE PROBLEMS

In view of the above-described circumstances, the present inventors intensively studied to discover that the above-described problems can be solved by producing an olefin resin composition with an addition of a phenolic antioxidant masked with an organoaluminum at the time of performing polymerization of an olefin monomer and an addition of a phosphorus-based antioxidant during or after the polymerization, thereby completing the present invention.

That is, the method of producing a molded article according to the present invention comprises the steps of: blending, before or during polymerization of an olefin monomer, a phenolic antioxidant, which is represented by the following Formula (1) and masked with an organoaluminum compound, in an amount of 0.001 to 0.5 parts by mass with respect to 100 parts by mass of an olefin resin obtained by the polymerization; and blending, at any one point of before, during or after the polymerization of the olefin monomer, a phosphorus-based antioxidant in an amount of 0.001 to 3 parts by mass with respect to 100 parts by mass of the olefin resin obtained by the polymerization, wherein an olefin resin composition obtained by the polymerization is molded and then sterilized by irradiation with radiation:

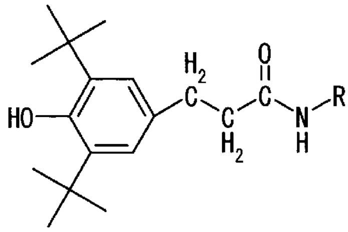

(1)

(wherein, R represents an alkyl group having 12 to 24 carbon atoms which is optionally branched and/or substituted, a cycloalkyl group having 3 to 12 carbon atoms which is optionally substituted, or an aryl group having 6 to 18 carbon atoms which is optionally substituted).

In the method of producing a molded article according to the present invention, it is preferred that the above-described organoaluminum compound be a trialkylaluminum.

Further, in the method of producing a molded article composition according to the present invention, it is preferred that the above-described irradiation with radiation is irradiation with $\gamma$-ray.

EFFECTS OF THE INVENTION

By the present invention, a method of producing an olefin resin composition, which is capable of producing an olefin resin composition in which reduction in the physical properties and occurrence of yellowing after a sterilization treatment by irradiation with radiation are suppressed, can be provided.

MODE FOR CARRYING OUT THE INVENTION

The method of producing an olefin resin according to the present invention is a method of producing an olefin resin composition for a molded article to be used after a sterilization treatment by irradiation with radiation, the method comprising: blending, before or during polymerization of an olefin monomer, a phenolic antioxidant, which is represented by the following Formula (1) and masked with an organoaluminum compound, in an amount of 0.001 to 0.5 parts by mass with respect to 100 parts by mass of an olefin resin obtained by the polymerization; and blending, at any one point of before, during or after the polymerization of the olefin monomer, a phosphorus-based antioxidant in an amount of 0.001 to 3 parts by mass with respect to 100 parts by mass of the olefin resin obtained by the polymerization:

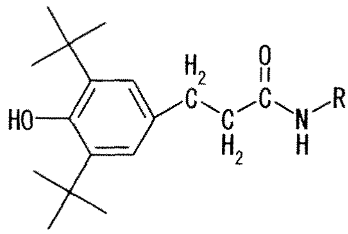

(1)

(wherein, R represents an alkyl group having 12 to 24 carbon atoms which is optionally branched and/or substituted, a cycloalkyl group having 3 to 12 carbon atoms which is optionally substituted, or an aryl group having 6 to 18 carbon atoms which is optionally substituted).

Examples of the alkyl group having 12 to 24 carbon atoms which is optionally branched and represented by R in the above-described Formula (1) include a dodecyl group, a tridecyl group, a tetradecyl group, a pentadecyl group, a hexadecyl group, a heptadecyl group and an octadecyl group. When the alkyl group has less than 12 carbon atoms, the phenolic antioxidant may be easily vaporized, while when the alkyl group has more than 24 carbon atoms, the ratio of phenol with respect to the molecular weight of the phenolic antioxidant is decreased, so that the stabilizing effect may be reduced.

The above-described alkyl groups are also optionally interrupted by an oxygen atom, a sulfur atom or the below-described aryl group, and the hydrogen atoms of the alkyl group are also optionally substituted with a hydroxy group, a cyano group, an alkenyl group, a chain aliphatic group such as an alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as a cycloalkyl group. In addition, these interruptions or substitutions may also exist in combination.

Examples of the cycloalkyl group having 3 to 12 carbon atoms which is optionally substituted and represented by R in the above-described Formula (1) include a cyclopropyl group, a cyclopentyl group, a cyclohexyl group, a cycloheptyl group, a cyclooctyl group, a cyclononyl group and a cyclodecyl group. The hydrogen atoms of the cycloalkyl group are optionally substituted with an alkyl group, an alkenyl group, an alkenyloxy group, a hydroxy group or a cyano group, and the alkyl group is also optionally interrupted by an oxygen atom or a sulfur atom.

Examples of the aryl group having 6 to 18 carbon atoms which is optionally substituted and represented by R in the above-described Formula (1) include a phenyl group, a methylphenyl group, a butylphenyl group, an octylphenyl group, a 4-hydroxyphenyl group, a 3,4,5-trimethoxyphenyl group, a 4-t-butylphenyl group, a biphenyl group, a naphthyl group, a methylnaphthyl group, an anthracenyl group, a phenanthryl group, a benzyl, a phenylethyl group and a 1-phenyl-1-methylethyl group. Further, the hydrogen atoms of the aryl group are optionally substituted with an alkyl group, an alkenyl group, an alkenyloxy group, a hydroxy group or a cyano group, and the alkyl group is also optionally interrupted by an oxygen atom or a sulfur atom.

Specific examples of the structure of the phenolic antioxidant represented by the above-described Formula (1) include the following compounds No. 1 to No. 16. However, the present invention is not restricted to the following compounds by any means.

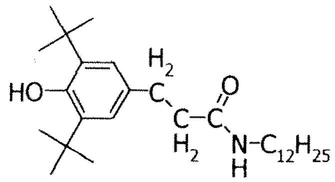
Compound No. 1

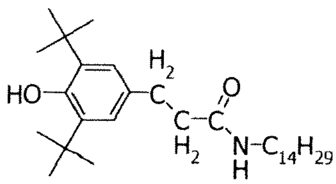
Compound No. 2

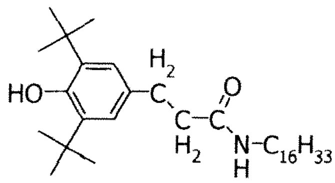
Compound No. 3

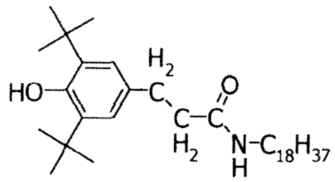
Compound No. 4

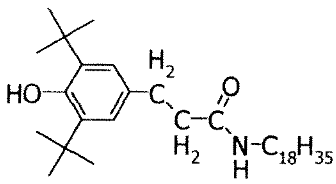
Compound No. 5

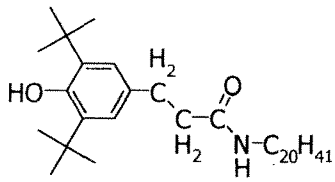
Compound No. 6

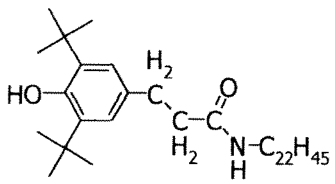
Compound No. 7

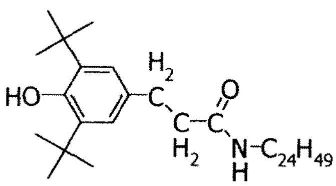
Compound No. 8

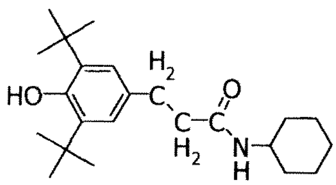
Compound No. 9

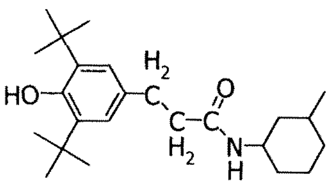
Compound No. 10

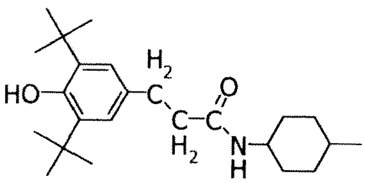
Compound No. 11

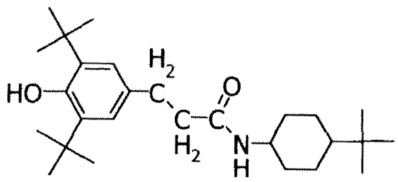
Compound No. 12

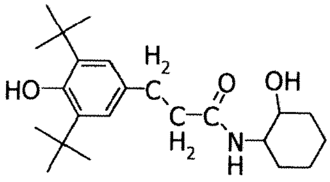

Compound No. 13

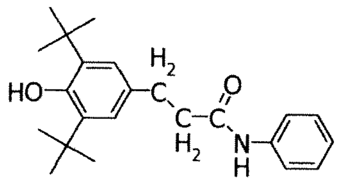

Compound No. 14

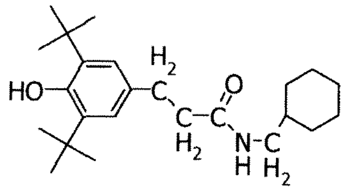

Compound No. 15

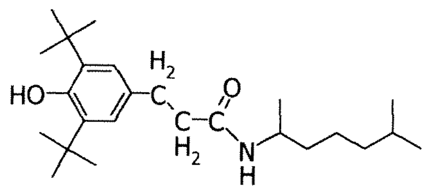

Compound No. 16

The above-described phenolic antioxidant is added in an amount of 0.001 to 0.5 parts by mass, preferably 0.001 to 0.3 parts by mass, with respect to 100 parts by mass of an olefin resin obtained by polymerization.

In the present invention, an amide compound of 3-(3,5-dialkyl-4-hydroxyphenyl)propionic acid represented by the Formula (1), such as stearyl-3-(3,5-di-tert-butyl-4-hydroxyphenyl)propionic acid amide, palmityl-3-(3,5-di-tert-butyl-4-hydroxyphenyl)propionic acid amide, myristyl-3-(3,5-di-tert-butyl-4-hydroxyphenyl)propionic acid amide or lauryl-3-(3,5-di-tert-butyl-4-hydroxyphenyl)propionic acid amide, is particularly preferred because excellent stabilization effect is attained and the resulting olefin resin composition exhibits excellent color tone.

In the present invention, by mixing an organoaluminum compound with the phenolic antioxidant, the hydrogen of the phenolic hydroxyl group of the phenolic antioxidant can be easily substituted with an organoaluminum compound, so that the phenolic antioxidant can be masked with organoaluminum. As the organoaluminum compound, such an organoaluminum compound that allows the phenolic antioxidant masked with a hydrogen-donating compound, such as water, an alcohol or an acid, to be regenerated to phenol by a treatment is employed.

As the above-described organoaluminum compound, for example, an alkylaluminum or an alkylaluminum hydride can be used, and an alkylaluminum is preferred. The organoaluminum compound is particularly preferably a trialkylaluminum and specific examples thereof include trimethylaluminum, triethylaluminum, tri-n-propylaluminum, triisobutylaluminum, tri-n-hexylaluminum and tri-n-octylaluminum. All of the above-described organoaluminum compounds may be used in the form of a mixture. In addition, an aluminoxane obtained by a reaction between an alkylaluminum or an alkylaluminum hydride and water can also be used in the same manner.

The term "masking" of the phenolic antioxidant with an organoaluminum compound refers to substitution of the hydrogen of the phenolic hydroxyl group of the phenolic antioxidant with an organoaluminum compound and, as the phenolic antioxidant, one which is masked and can be regenerated into a phenol compound by a treatment with a hydrogen-donating compound such as water, an alcohol or an acid is employed. Among such phenolic antioxidants, those which react with a deactivator used for a catalyst deactivation treatment in a polymerization reaction are preferred, and phenolates (salts), which normally exist in a polymerization system including a polymerization catalyst of an olefin resin and can be obtained by a reaction between an organoaluminum compound that does not inhibit polymerization and a phenolic antioxidant, are particularly preferred.

As a method of the above-described masking, the organoaluminum compound and the phenolic antioxidant can be simply mixed with stirring in an inert solvent. In cases where the compound produced as a by-product in the reaction of this method does not affect the resulting polymer, the thus masked phenolic antioxidant may be used as is; however, in cases where the by-product compound inhibits polymerization, it is preferred to remove the compound by vacuum distillation or the like before using the masked phenolic antioxidant.

Examples of the above-described inert solvent include aliphatic and aromatic hydrocarbon compounds. Examples of the aliphatic hydrocarbon compounds include saturated hydrocarbon compounds such as n-pentane, n-hexane, n-heptane, n-octane, isooctane and refined kerosene; and cyclic saturated hydrocarbon compounds such as cyclopentane, cyclohexane and cycloheptane. Examples of the aromatic hydrocarbon compounds include benzene, toluene, ethylbenzene and xylene. Among these compounds, n-hexane or n-heptane is preferably used. The concentration of a trialkylaluminum salt in the inert solvent is in the range of preferably 0.001 to 0.5 mol/L, particularly preferably 0.01 to 0.1 mol/L.

Examples of the above-described phosphorus-based antioxidant include triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene-bis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and phosphite of 2-ethyl-2-butylpropylene glycol and 2,4,6-tri-tert-butylphenol. Thereamong, a phosphorus-based antioxidant which does not adversely affect polymerization even when it is added therebefore, such as tris(2,4-di-tert-butylphenyl)phosphite, is preferred. The above-described phosphorus-based antioxidant is used in an amount of 0.001 to 3 parts by mass, preferably 0.001 to 0.5 parts by mass, with respect to 100 parts by mass of an olefin resin obtained by polymerization.

Examples of the olefin monomer used in the present invention include ethylene, propylene, 1-butene, 1-hexene, 3-methyl-1-butene, 3-methyl-1-pentene, 4-methyl-1-pentene, vinylcycloalkane, styrene and derivatives of these monomers.

The above-described olefin resin is obtained by homopolymerization of the above-described olefin monomers or copolymerization including the olefin monomer(s), and examples of such olefin resin include polypropylenes such as copolymers of propylene and an $\alpha$-olefin(s) other than propylene (e.g., propylene homopolymers, ethylene-propylene copolymers and ethylene-propylene-butene copolymers); polyethylenes such as high-density polyethylenes, linear low-density polyethylenes and low-density polyethylenes; and cycloolefins.

The polymerization of the olefin monomer is required to be performed in the presence of a polymerization catalyst in an inert gas atmosphere such as nitrogen; however, it may also be performed in the above-described inert solvent. Further, an active hydrogen compound, a particulate carrier, an organoaluminum compound, an ion-exchanging layered compound and/or an inorganic silicate may also be added in an amount that does not inhibit the polymerization.

In the present invention, the above-described polymerization catalyst is not particularly restricted and any known polymerization catalyst can be employed. Examples thereof include compounds of transition metals belonging to any of the groups 3 to 11 of the periodic table (such as titanium, zirconium, hafnium, vanadium, iron, nickel, lead, platinum, yttrium and samarium). Representative examples of the polymerization catalyst that can be used include Ziegler catalysts; Ziegler-Natta catalysts composed of a titanium-containing solid transition metal component and an organic metal component; metallocene catalysts composed of a transition metal compound belonging to any one of the groups 4 to 6 of the periodic table, which has at least one cyclopentadienyl skeleton, and a co-catalyst component; and chrome-based catalysts.

In the present invention, the polymerization method of the olefin monomer is not particularly restricted and any known method can be employed. Examples thereof include: a slurry polymerization method in which polymerization is carried out in an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g. toluene, xylene or ethylbenzene), a gasoline fraction or a hydrogenated diesel fraction; a gas-phase polymerization method in which polymerization is carried out in a gas phase; a bulk polymerization method in which an olefin monomer itself is used as a solvent; a solution polymerization method in which a polymer is generated in a liquid form; a polymerization method which combines these methods; a method of producing a polyolefin resin by polymerizing an olefin monomer in a single step or multiple steps; and a polymerization method in which a copolymer is produced by copolymerizing propylene with at least one olefin (other than propylene) unit selected from the group consisting of olefin units having 2 to 12 carbon atoms.

As a polymerization vessel to be used in the above-described polymerization method, a continuous reaction vessel provided in an existing polymerization equipment can be used as is, and the present invention is not particularly restricted by the size, shape, material or the like of conventional polymerization equipment.

In the above-described olefin resin, as required, other conventional additive(s) may be blended as well. As a method of blending other additive(s), any additive may be added at the time of polymerizing the olefin monomer as long as the additive does not inhibit the polymerization. Alternatively, the addition may be carried out by a method in which, after polymerization of an olefin monomer, other additive(s) in an amount appropriate for the purpose thereof is mixed with the resulting olefin resin and the resulting mixture is then melt-kneaded to be granulated and molded using a molding machine such as an extruder.

Examples of the above-described other additives include a phenolic antioxidant, a phosphorus-based antioxidant, a thioether-based antioxidant, an ultraviolet absorber, a heavy metal inactivator, a nucleating agent, a flame retardant, a metallic soap, a hydrotalcite, a filler, a lubricant, an antistatic agent, a pigment, a dye and a plasticizer.

The above-described phenolic antioxidant may be the same as or different from the one represented by the

above-described Formula (1). Examples thereof include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis-(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), iso-octyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamide-bis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxybenzenepropanoate, C13-15 alkyl esters, 2,5-di-t-amylhydroquinone, hindered phenol polymer (AO.OH998, manufactured by ADEKA PALMAROLE SAS), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,1 0-tetra-t-butylbenzo[d,f] [1,3,2]-dioxaphosphepin, hexamethylenebis[3-(3,5-di-t-butyl-4-hydroxyphenyl)propionate, calcium bis[monoethyl(3,5-di-t-butyl-4-hydroxybenzyl)phosphonate, a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-t-butyl-phenyl)butyric acid]glycol ester, 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-dit-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3 -t-butyl-5-methylbenzyl)phenol, 3,9-bis[2-(3 -t-butyl-4-hydroxy-5 - methylhydrocinnamoyloxy)-1,1-dimethylethyl]-2,4,8,10-tetraoxaspiro[5.5]undecane, triethylene glycol-bis[β-(3-t-butyl-4-hydroxy-5-methylphenyl)propionate] and phenolic antioxidants represented by the above-described Formula (1). Thereamong, tetrakis[methylene-3-(3',5'-di-t-butyl-4'-hydroxyphenyl)propionate]methane is particularly preferably used since it is relatively inexpensive and has good cost performance.

Examples of the above-described phosphorus-based antioxidant include the same ones as those exemplified in the above.

In the present invention, it is preferred that a thioether-based antioxidant be further added since it largely improves the heat resistance of the above-described polymer. Examples of the thioether-based antioxidant include tetrakis[methylene-3-(laurylthio)propionate]methane, bis(methyl-4-[3-n-alkyl(C12/C14)thiopropionyloxy]5-t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl disulfide.

The thioether-based antioxidant is used in an amount of preferably 0.001 to 0.3 parts by mass, more preferably 0.01 to 0.3 parts by mass, with respect to 100 parts by mass of the olefin resin.

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and a variety of metal salts and metal chelates, particularly salts and chelates of nickel and chromium.

The above-described ultraviolet absorber is used in an amount of preferably 0.001 to 5 parts by mass, more preferably 0.005 to 0.5 parts by mass, with respect to 100 parts by mass of the above-described olefin resin.

Examples of the above-described nucleating agent include metal carboxylates such as sodium benzoate, aluminum 4-tert-butylbenzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described nucleating agent is used in an amount of preferably 0.001 to 10 parts by mass, more preferably 0.005 to 5 parts by mass, with respect to 100 parts by mass of the above-described olefin resin.

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphonates such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.

The above-described flame retardant is used in an amount of preferably 1 to 70 parts by mass, more preferably 10 to 30 parts by mass, with respect to 100 parts by mass of the above-described olefin resin.

Preferred examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite and fibrous magnesium oxysulfate. Thereamong, a filler having an average particle size (in the case of a spherical or plate-form filler) or an average fiber diameter (in the case of a needle-form or fibrous filler) of 5 μm or less is preferred.

The above-described filler is used in an amount of preferably 0.1 to 50 parts by mass, more preferably 0.1 to 10 parts by mass, with respect to 100 parts by mass of the above-described olefin resin.

The above-described lubricant is added for the purpose of imparting the surface of the resulting molded article with lubricity and improving the damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of preferably 0.03 to 2 parts by mass, more preferably 0.04 to 1 part by mass, with respect to 100 parts by mass of the above-described olefin resin. When the amount is less than 0.03 parts by mass, the desired lubricity may not be attained, while when the amount is greater than 2 parts by mass, the lubricant component may bleed out to the surface of the resulting molded article of the polymer and/or cause deterioration in the physical properties thereof.

The above-described antistatic agent is added for the purpose of reducing the electrostatic property of the resulting molded article and preventing adhesion of dusts caused by electrostatic charge. Examples of such antistatic agent include cationic, anionic and non-ionic antistatic agents. Preferred examples thereof include polyoxyethylene alkylamines, polyoxyethylene alkylamides, fatty acid esters thereof and glycerin fatty acid esters. These antistatic agents may be used individually, or two or more thereof may be used in combination. Further, the antistatic agent(s) is/are added in an amount of preferably 0.03 to 2 parts by mass, more preferably 0.04 to 1 part by mass, with respect to 100 parts by mass of the above-described polymer. When the amount of the antistatic agent(s) is excessively small, the antistatic effect is insufficient, while when the amount is excessively large, the antistatic agent(s) may bleed out to the surface and/or cause deterioration in the physical properties of the polymer.

Examples of the molded article of the present invention used in the medical and hygiene applications include those in which a material(s) is/are to be filled and packages of medical and hygiene-related equipments, such as glass syringes, liquid medicine-filled syringes, injection needle hubs, infusion sets (infusion solution bags, infusion tubes and infusion control devices), blood transfusion sets, blood collection equipments and packaging materials of medical equipments (e.g., gauzes, forceps and surgical scalpels).

EXAMPLES

(Preparation of Solid Catalyst Component)

After preparing a uniform solution by adding and allowing 4.76 g (50 mmol) of anhydrous magnesium chloride, 25 mL of decane and 23.4 mL (150 mmol) of 2-ethylhexyl alcohol to react under heating at 130°C for 2 hours, 1.11 g (7.5 mmol) of phthalic anhydride was further added and the resulting solution was stirred at 130°C for 1 hour to dissolve the phthalic anhydride therein. Then, the resulting uniform solution was cooled to room temperature and the whole amount thereof was added dropwise over a period of 1 hour to 200 ml (1.8 mol) of titanium tetrachloride maintained at -20°C. Thereafter, the temperature of the resultant was raised to 110°C over a period of 4 hours. Once the temperature reached 110°C, 2.68 ml (12.5 mmol) of diisobutyl phthalate was added and allowed to react by maintaining the resulting mixture under stirring at 110°C for 2 hours. After the completion of the reaction, the resulting residue was collected by hot-filtration and re-suspended in 200 ml of titanium tetrachloride, and the resulting suspension was again allowed to react under heating at 110°C for 2 hours. Thereafter, the residue was once again collected by hot-filtration and then thoroughly washed with decane and hexane at 110°C until no free titanium compound was detected in the washings, thereby obtaining a solid titanium catalyst component. When a portion of the thus obtained solid titanium catalyst component was sampled and dried and the catalyst composition was analyzed, it was found that the catalyst contained 3.1% by weight of titanium, 56.0% by weight of chlorine, 17.0% by weight of magnesium and 20.9% by weight of isobutyl phthalate.

(Preparation of Phenoxide Solution)

In a flask whose atmosphere had been replaced with nitrogen, 10 ml of heptane, 54 mg of triethylaluminum and 161 mg of each phenolic antioxidant shown in Tables 1 and 2 were mixed with stirring to mask the phenolic antioxidant, thereby preparing a phenoxide solution having a phenolic antioxidant concentration of 16 mg/mL.

(Preparation of Phosphite Solution)

To a flask whose atmosphere had been replaced with nitrogen, 144 mg of each phosphorus-based antioxidant shown in Tables 1 and 2 was added, and 6 mL of heptane was admixed thereto with stirring to prepare a phosphite solution having a phosphorus-based antioxidant concentration of 24 mg/mL.

(Polymerization)

To an autoclave whose atmosphere was replaced with nitrogen, 600 mL of heptane, 303 mg of triethylaluminum and the thus obtained phenoxide solution and phosphite solution were added such that the resultant contained each stabilizer composition shown in Table 1 or 2. Then, 0.26 mmol of dicyclopentyldimethoxysilane and a heptane slurry of the solid Ti catalyst component (13 μmol in terms of Ti) were successively added. The atmosphere inside the autoclave was replaced with propylene and pre-polymerization was performed under a propylene pressure of 1 $kgf/cm^2G$ at 50°C for 5 minutes. After purging propylene, 340 ml of hydrogen (23°C) was blown into the autoclave and the temperature was raised to 70°C to perform polymerization reaction under a propylene pressure of 6 $kgf/cm^2G$ at 70°C for 1 hour. Thereafter, the atmosphere in the system was replaced with nitrogen gas and the polymerization reaction was quenched by adding 5 ml of ethanol at 40°C. The solvent was removed under reduced pressure at 50°C and the resulting polymer was dried in vacuum at 40°C for 5 hours to obtain polypropylene powder.

(Processing)

To 100 parts by mass of the polypropylene powder obtained by the above-described method, the stabilizer composition shown in Table 1 or 2 and 0.07 parts by mass of calcium stearate were added and mixed. Then, the resulting composition was introduced to the space between an endless belt wound on a plurality of cooling rolls and a mirror-finished cooling roll. The composition was pressed into a sheet form by the above-described endless belt and mirror-finished cooling roll and rapidly cooled at the same time to obtain a 0.3 mm-thick sheet.

(1) Molding machine: metal roll/metal belt cooling-type monolayer sheet molding machine (φ65mm)

Preset temperatures: C1/C2/C3/C4/C5/D = 200/200/210/220/230/240°C
(wherein, C represents the cylinder temperature of the respective extruders; D represents the preset temperature of the die; and the numbers each represent the position from the hopper side)

(2) Temperature of the endless belt and mirror-finished cooling roll: 15°C (Irradiation with Radiation)

Using an irradiation apparatus manufactured by Kimura Chemical Plants Co., Ltd. (radiation irradiator utilizing cobalt 60), each sheet obtained by the above-described method was irradiated with γ-ray (absorbed dose: 25 kGy, irradiation time: 3 hours).

(Evaluation Methods)

Before and after the irradiation with γ-ray, the physical properties of each sheet were measured by the following methods. The evaluation results of each sheet before and after the irradiation with radiation are shown in Tables 1 and 2, respectively. (1) Yellowness (Y.I.) of Sheet
In accordance with JIS K7105, the yellowness (Y.I.) of each sheet was measured using a spectrocolorimeter (SC-P; manufactured by Suga Test Instruments Co., Ltd.).

(2) Haze (Sheet)

In accordance with JIS K7105-1981, the haze of each sheet was measured using HAZE GUARD 2 (manufactured by Toyo Seiki Seisaku-sho, Ltd.).

(3) Tensile Elastic Modulus

The tensile elastic modulus was measured in accordance with JIS K7127. It is noted here that, in Tables below, the "tensile elastic modulus (MD)" and the "tensile elastic modulus (TD)" are the values that were measured when the sheet was stretched in the direction parallel to and perpendicular to the direction of the resin flow during the molding of the sheet, respectively.

(4) Residual Elongation Ratio (%)

In accordance of the test method prescribed in JIS K7127/1B/50, the elongation of each test piece before and after the irradiation with γ-ray was measured. Using the following equation, the residual elongation ratio (%) was calculated. The results thereof are shown in Table 2.

$$\frac{\text{Elongation after irradiation with γ-ray}}{\text{Elongation before irradiation with γ-ray}} \times 100 = \text{Residual elongation ratio (\%)}$$

(5) Elution Amount

After obtaining polypropylene powder by performing polymerization in the same manner as described above such that the polymerization product contained each stabilizer composition shown in Table 2, 0.07 parts by mass of calcium stearate and the stabilizer composition to be added after the polymerization, which is shown in Table 2, were added to 100 parts by mass of the thus obtained polypropylene powder. The resultant was mixed and then extruded from a T-die at a temperature of 250°C, a thickness of 60 μm and a width of 300 mm, thereby obtaining a film sheet. The thus obtained film sheet was irradiated with radiation under the same conditions as described above and a 130 mm × 170 mm packaging bag was produced from the film sheet. As a content, 200 ml of water was enclosed in the packaging bag, and this packaging bag was then subjected to a hot water-stationary retort sterilization treatment at 120°C for 30 minutes. After the sterilization treatment, the packaging bag was cooled to room temperature and its content, water, was mixed with chloroform to be extracted into chloroform, followed by concentration. Thereafter, using a gas chromatograph-mass spectrometer, low-molecular weight substances, such as the blended additives and their oxides and decomposition products, were quantified to determine the eluted amount of the respective blended additives. Then, the ratio of the eluted amount of each formulation example was determined, taking the eluted amount of Comparative Example 2-5 as 1.

[Table 1]

| | Stabilizer composition added at the time of polymerization | | Stabilizer composition added after polymerization | | Total amount of stabilizer compositions [parts by mass] | Measurement evaluation - before irradiation with γ-ray | | | |
|---|---|---|---|---|---|---|---|---|---|
| | Compound | Added amount [parts by mass] | Compound | Added amount [parts by mass] | | Y.I. | Haze | Tensile elastic modulus (MD) | Tensile elastic modulus (TD) |
| Example 1-1 | AO-1[1]<br>P-1[2] | 0.01<br>0.03 | | | 0.04 | 2.3 | 5.1 | 1.11 | 1.22 |
| Example 1-2 | AO-1[1] | 0.01 | P-1[2] | 0.10 | 0.11 | 2.2 | 5.2 | 1.13 | 1.23 |
| Comparative Example 1-1 | AO-1[1] | 0.05 | | | 0.05 | - | - | - | - |
| Comparative Example 1-2 | | | AO-1[1] | 0.05 | 0.05 | - | - | - | - |
| Comparative Example 1-3 | AO-2[3] | 0.10 | | | 0.10 | - | - | - | - |
| Comparative Example 1-4 | | | AO-2[3] | 0.10 | 0.10 | - | - | - | - |
| Comparative Example 1-5 | P-1[2] | 0.10 | | | 0.10 | - | - | - | - |
| Comparative Example 1-6 | | | P-1[2] | 0.10 | 0.10 | - | - | - | - |
| Comparative Example 1-7 | AO-2[1] | 0.01 | P-1[2] | 0.03 | 0.04 | - | - | - | - |
| Comparative Example 1-8 | P-1[2] | 0.03 | AO-1[1] | 0.01 | 0.04 | - | - | - | - |
| Comparative Example 1-9 | AO-2[3]<br>P-1[2] | 0.01<br>0.03 | | | 0.04 | - | - | - | - |
| Comparative Example 1-10 | | | AO-1[1]<br>P-1[2] | 0.01<br>0.03 | 0.04 | - | - | - | - |
| Comparative Example 1-11 | | | AO-2[3]<br>P-1[2] | 0.01<br>0.03 | 0.04 | - | - | - | - |

(continued)

| | Stabilizer composition added at the time of polymerization | | Stabilizer composition added after polymerization | | Total amount of stabilizer compositions [parts by mass] | Measurement evaluation - before irradiation with $\gamma$-ray | | | |
|---|---|---|---|---|---|---|---|---|---|
| | Compound | Added amount [parts by mass] | Compound | Added amount [parts by mass] | | Y.I. | Haze | Tensile elastic modulus (MD) | Tensile elastic modulus (TD) |
| Comparative Example 1-12 | | | AO-1[1)]<br>P-1[2)] | 0.10<br>0.10 | 0.20 | 3.2 | 5.4 | 1.14 | 1.23 |
| Comparative Example 1-13 | | | AO-2[3)]<br>P-1[2)] | 0.10<br>0.10 | 0.20 | 3.4 | 5.4 | 1.13 | 1.21 |

1) AO-1: Compound No. 4 described above
2) P-1: tris(2,4-di-t-butylphenyl)phosphite
3) AO-2: tetrakis[methylenebis-3-(3,5-di-t-butyl-4'-hydroxyphenyl)propionate]methane

[Table 2]

| | Stabilizer composition added at the time of polymerization | | Stabilizer composition added after polymerization | | Total amount of stabilizer compositions [parts by mass] | Measurement evaluation - After irradiation with $\gamma$-ray | | | | | |
|---|---|---|---|---|---|---|---|---|---|---|---|
| | Compound | Added amount [parts by mass] | Compound | Added amount [parts by mass] | | Y.I. | Haze | Tensile elastic modulus (MD) | Tensile elastic modulus (TD) | Residual elongation ratio (%) | Ratio of eluted amount |
| Example 1-1 | AO-1[1)] | 0.01 | | | 0.05 | 3.6 | 5.0 | 1.32 | 1.42 | 92 | 0.5 |
| | P-1[2)] | 0.03 | | | | | | | | | |
| Example 1-2 | AO-1[1)] | 0.01 | P-1[2)] | 0.10 | 0.04 | 3.5 | 5.2 | 1.30 | 1.41 | 93 | 0.7 |
| Comparative Example 1-12 | | | AO-1[1)]<br>P-1[2)] | 0.10<br>0.10 | 0.20 | 5.9 | 5.2 | 1.36 | 1.43 | 91 | 1.0 |
| Comparative Example 1-13 | | | AO-2[3)]<br>P-1[2)] | 0.10<br>0.10 | 0.20 | 6.9 | 5.3 | 1.33 | 1.39 | 91 | 1.0 |

For the polyolefin resin compositions of Comparative Examples 1-1 to 1-11, since defective molding occurred and the resulting sheets thus did not have a homogeneous surface, the sheets were not subjected to the evaluations and irradiation with γ-ray. As a result of analysis, this was believed to be caused by a reduction in the molecular weight of the polyolefin resin due to thermal degradation during the processing.

In contrast, the sheets produced by molding the polyolefin resin composition obtained in accordance with the production method of the present invention were confirmed to have excellent stabilization effect. Particularly, from the comparison between Example 1-1 and Comparative Example 1-12, it was confirmed that, despite the amount of the stabilizer compositions that were blended in the sheet produced by molding the polyolefin resin composition obtained in accordance with the production method of the present invention was 1/4 of the amount of the stabilizer compositions blended in this Comparative Example, these sheets had comparable transparency and physical properties and coloration was inhibited.

## Claims

1. A method of producing a molded article, comprising the steps of:

   blending, before or during polymerization of an olefin monomer, a phenolic antioxidant, which is represented by the following Formula (1) and masked with an organoaluminum compound, in an amount of 0.001 to 0.5 parts by mass with respect to 100 parts by mass of an olefin resin obtained by the polymerization; and
   blending, at any one point of before, during or after the polymerization of the olefin monomer, a phosphorus-based antioxidant in an amount of 0.001 to 3 parts by mass with respect to 100 parts by mass of the olefin resin obtained by the polymerization,
   wherein an olefin resin composition obtained by the polymerization is molded and then sterilized by irradiation with radiation:

   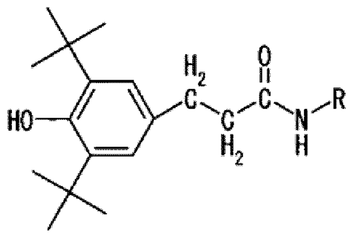 (1)

   (wherein, R represents an alkyl group having 12 to 24 carbon atoms which is optionally branched and/or substituted, a cycloalkyl group having 3 to 12 carbon atoms which is optionally substituted, or an aryl group having 6 to 18 carbon atoms which is optionally substituted).

2. The method of producing a molded article according to claim 1, wherein said organoaluminum compound is a trialkylaluminum.

3. The method of producing a molded article according to any of claims 1 and 2, wherein said irradiation with radiation is irradiation with γ-ray.

4. The method of producing a molded article according to any preceding claim, wherein said phenolic antioxidant is blended in an amount of 0.001 to 0.3 parts by mass with respect to 100 parts by mass of an olefin resin obtained by the polymerization.

5. The method of producing a molded article according to any preceding claim, wherein said phosphorus-based antioxidant is blended in an amount of 0.001 to 0.5 parts by mass with respect to 100 parts by mass of an olefin resin obtained by the polymerization.

6. The method of producing a molded article according to any preceding claim, wherein the phenolic antioxidant is represented by one of the following compounds;

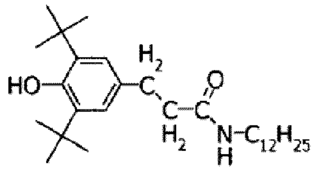

Compound No. 1

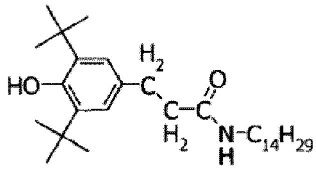

Compound No. 2

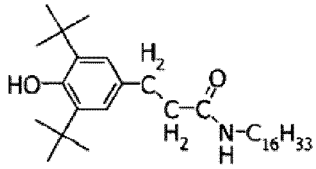

Compound No. 3

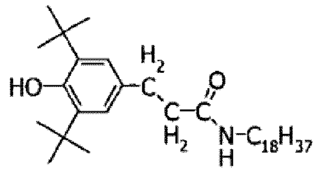

Compound No. 4

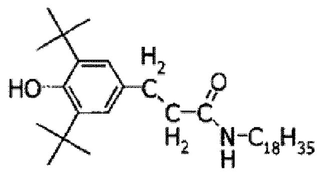

Compound No. 5

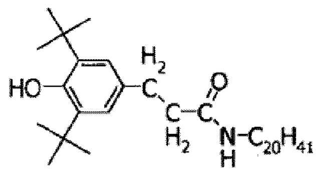

Compound No. 6

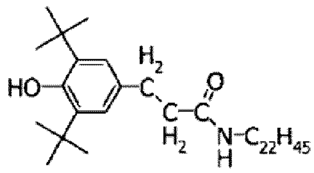

Compound No. 7

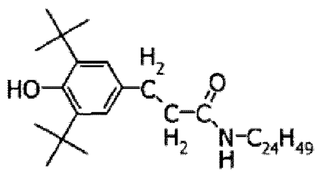

Compound No. 8

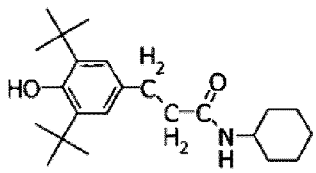

Compound No. 9

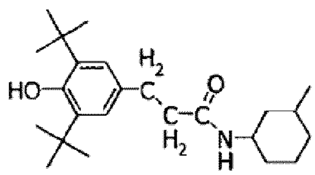

Compound No. 10

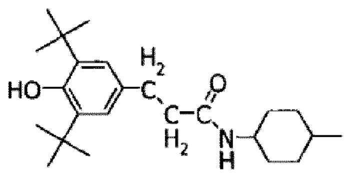

Compound No. 11

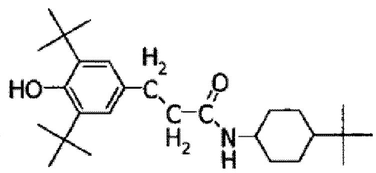

Compound No. 12

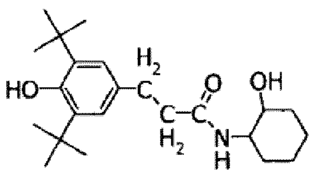

Compound No. 13

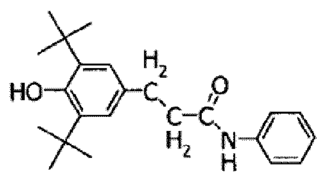

Compound No. 14

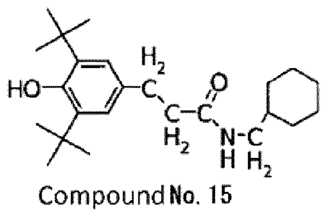

Compound No. 15

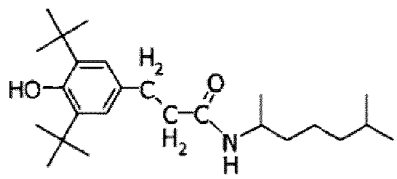

Compound No. 16

7. The method of producing a molded article according to any preceding claim, wherein the phosphorus-based antioxidant is selected from one of the following compounds; triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene-bis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and phosphite of 2-ethyl-2-butylpropylene glycol and 2,4,6-tri-tert-butylphenol, preferably tris(2,4-di-tert-butylphenyl)phosphite.

**8.** The method of producing a molded article according to any preceding claim, wherein the olefin monomer is selected from one of the following; ethylene, propylene, 1-butene, 1-hexene, 3-methyl-1-butene, 3-methyl-1-pentene, 4-methyl-1-pentene, vinylcycloalkane, styrene and derivatives of these monomers.

**9.** The method of producing a molded article according to any preceding claim, wherein said olefin resin composition obtained by the polymerization is melt-kneaded to be granulated and molded using an extruder.

**Patentansprüche**

**1.** Verfahren zur Herstellung eines Formteils, umfassend die Schritte:

Mischen eines phenolischen Antioxidationsmittels vor oder während der Polymerisation eines Olefinmonomers, das durch die folgende Formel (1) dargestellt ist und mit einer Organoaluminiumverbindung maskiert ist, in einer Menge von 0,001 bis 0,5 Massenteilen bezogen auf 100 Massenteile eines durch die Polymerisation erhaltenen Olefinharzes; und
Mischen eines Antioxidationsmittels auf Phosphorbasis an jedem beliebigen Punkt vor, während oder nach der Polymerisation des Olefinmonomers in einer Menge von 0,001 bis 3 Massenteilen bezogen auf 100 Massenteile des durch die Polymerisation erhaltenen Olefinharzes,
wobei eine durch die Polymerisation erhaltene Olefinharzzusammensetzung geformt und dann durch Bestrahlung mit Strahlen sterilisiert wird:

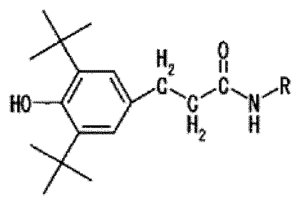

(1)

(wobei R für eine Alkylgruppe mit 12 bis 24 Kohlenstoffatomen, die gegebenenfalls verzweigt und/oder substituiert ist, eine Cycloalkylgruppe mit 3 bis 12 Kohlenstoffatomen, die gegebenenfalls substituiert ist, oder eine Arylgruppe mit 6 bis 18 Kohlenstoffatomen, die gegebenenfalls substituiert ist, steht).

**2.** Verfahren zur Herstellung eines Formteils nach Anspruch 1, wobei es sich bei der Organoaluminiumverbindung um ein Trialkylaluminium handelt.

**3.** Verfahren zur Herstellung eines Formteils nach einem der Ansprüche 1 und 2, wobei die Bestrahlung mit Strahlen durch Bestrahlung mit Gammastrahlen erfolgt.

**4.** Verfahren zur Herstellung eines Formteils nach einem der vorhergehenden Ansprüche, wobei das phenolische Antioxidationsmittel in einer Menge von 0,001 bis 0,3 Massenteilen bezogen auf 100 Massenteile eines durch die Polymerisation erhaltenen Olefinharzes gemischt wird.

**5.** Verfahren zur Herstellung eines Formteils nach einem der vorhergehenden Ansprüche, wobei das Antioxidationsmittel auf Phosphorbasis in einer Menge von 0,001 bis 0,5 Massenteilen bezogen auf 100 Massenteile eines durch die Polymerisation erhaltenen Olefinharzes gemischt wird.

**6.** Verfahren zur Herstellung eines Formteils nach einem der vorhergehenden Ansprüche, wobei das phenolische Antioxidationsmittel durch eine der folgenden Verbindungen dargestellt wird:

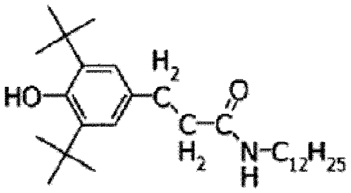

Verbindung Nr. 1

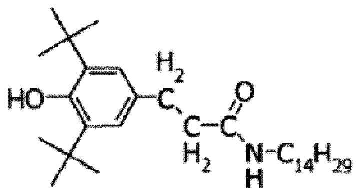

Verbindung Nr. 2

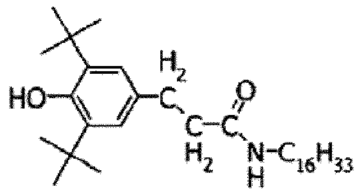

Verbindung Nr. 3

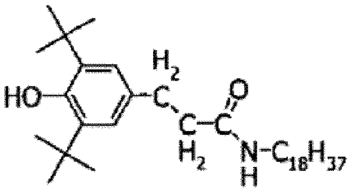

Verbindung Nr. 4

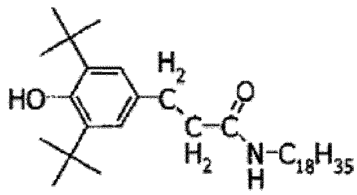

Verbindung Nr. 5

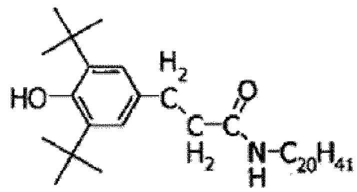

Verbindung Nr. 6

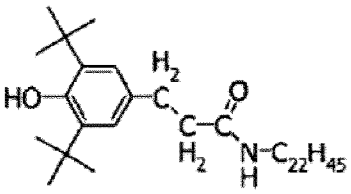

Verbindung Nr. 7

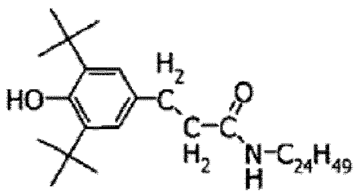

Verbindung Nr. 8

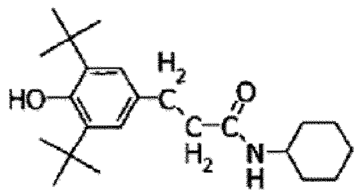

Verbindung Nr. 9

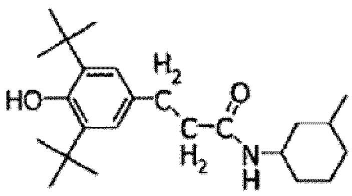

Verbindung Nr. 10

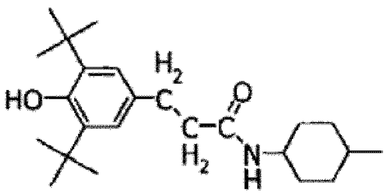

Verbindung Nr. 11

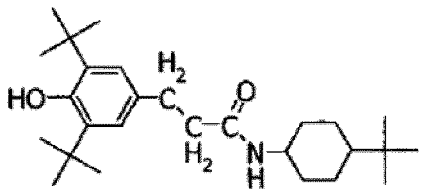

Verbindung Nr. 12

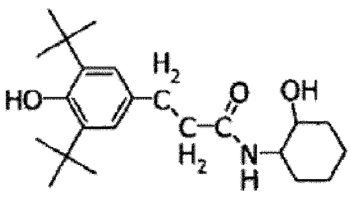

Verbindung Nr. 13

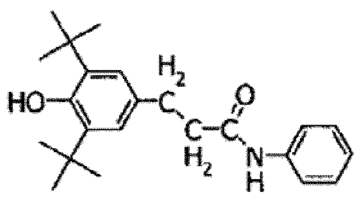

Verbindung Nr. 14

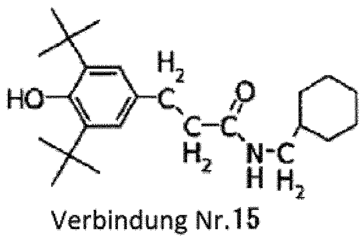

Verbindung Nr. 15

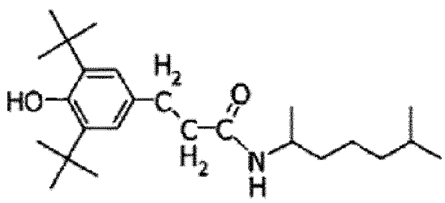

Verbindung Nr. 16

**7.** Verfahren zur Herstellung eines Formteils nach einem der vorhergehenden Ansprüche, wobei das Antioxidationsmittel auf Phosphorbasis aus einer der folgenden Verbindungen ausgewählt ist: Triphenylphosphit, Trisnonylphenylphosphit, Tris(2,4-di-tert-butylphenyl)phosphit, Tris(2,4-di-tert-butyl-5-methylphenyl)phosphit, Tris[2-tert-butyl-4-(3-tert-butyl-4-hydroxy-5-methylphenylthio)-5-methylphenyl]phosphit, Tridecylphosphit, Octyldiphenylphosphit,

Di(decyl)monophenylphosphit, Di(tridecyl)pentaerythritoldiphosphit, Di(nonylphenyl)pentaerythritoldiphosphit, Bis(2,4-di-tert-butylphenyl)pentaerythritoldiphosphit, Bis(2,6-di-tert-butyl-4-methylphenyl)pentaerythritoldiphosphit, Bis(2,4,6-tri-tert-butylphenyl)pentaerythritoldiphosphit, Bis(2,4-dicumylphenyl)pentaerythritoldiphosphit, Tetra(tridecyl)isopropylidenediphenoldiphosphit, Tetra(tridecyl)-4,4'-n-butyliden-bis(2-tert-butyl-5-methylphenol)diphosphit, Hexa(tridecyl)-1,1,3-tris(2-methyl-4-hydroxy-5-tert-butylphenyl)butantriphosphit, Tetrakis(2,4-di-tert-butylphenyl)biphenylendiphosphonit, 9,10-Dihydro-9-oxa-10-phosphaphenanthren-10-oxid, 2,2'-Methylenbis(4,6-di-tert-butylphenyl)-2-ethylhexylphosphit, 2,2'-Methylenbis(4,6-di-tert-butylphenyl)-octadecylphosphit, 2,2'-Ethylidenbis(4,6-di-tert-butylphenyl)fluorphosphit, Tris(2-[(2,4,8,10-tetrakis-tert-butyldibenzo[d,f][1,3,2]dioxaphosphepin-6-yl)oxy]ethyl)amin und Phosphit von 2-Ethyl-2-butylpropylenglycol und 2,4,6-Tri-tert-butylphenol, vorzugsweise Tris(2,4-di-tert- butylphenyl)phosphit.

**8.** Verfahren zur Herstellung eines Formteils nach einem der vorhergehenden Ansprüche, wobei das Olefinmonomer aus einem der Folgenden ausgewählt ist: Ethylen, Propylen, 1-Buten, 1-Hexen, 3-Methyl-1-buten, 3-Methyl-1-penten, 4-Methyl-1-penten, Vinylcycloalkan, Styrol und Derivaten dieser Monomere.

**9.** Verfahren zur Herstellung eines Formteils nach einem der vorhergehenden Ansprüche, wobei die durch die Polymerisation erhaltene Olefinharzzusammensetzung schmelzgeknetet wird, um granuliert und mithilfe eines Extruders geformt zu werden.

## Revendications

**1.** Procédé de production d'un article moulé, comprenant les étapes de :

mélange, avant ou pendant la polymérisation d'un monomère d'oléfine, d'un antioxydant phénolique, qui est représenté par la formule (1) suivante et masqué avec un composé organoaluminique, dans une quantité de 0,001 à 0,5 partie en masse pour 100 parties en masse d'une résine d'oléfine obtenue par la polymérisation ; et mélange, en tout instant avant, pendant ou après la polymérisation du monomère d'oléfine, d'un antioxydant à base de phosphore dans une quantité de 0,001 à 3 parties en masse pour 100 parties en masse de la résine d'oléfine obtenue par la polymérisation,
dans lequel une composition de résine d'oléfine obtenue par la polymérisation est moulée puis stérilisée par irradiation avec un rayonnement :

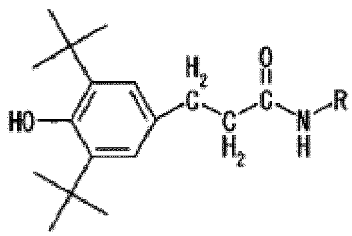
(1)

(dans lequel, R représente un groupe alkyle comportant de 12 à 24 atomes de carbone qui est facultativement ramifié et/ou substitué, un groupe cycloalkyle comportant 3 à 12 atomes de carbone qui est facultativement substitué, ou un groupe aryle comportant 6 à 18 atomes de carbone qui est facultativement substitué).

**2.** Procédé de production d'un article moulé selon la revendication 1, dans lequel ledit composé organoaluminique est un trialkylaluminium.

**3.** Procédé de production d'un article moulé selon les revendications 1 et 2, dans lequel ladite irradiation avec le rayonnement est une irradiation aux rayons $\gamma$.

**4.** Procédé de production d'un article moulé selon une quelconque revendication précédente, dans lequel ledit antioxydant phénolique est mélangé dans une quantité de 0,001 à 0,3 partie en masse pour 100 parties en masse d'une résine d'oléfine obtenue par la polymérisation.

**5.** Procédé de production d'un article moulé selon une quelconque revendication précédente, dans lequel ledit antioxydant à base de phosphore est mélangé dans une quantité de 0,001 à 0,5 partie en masse pour 100 parties en

masse d'une résine d'oléfine obtenue par la polymérisation.

**6.** Procédé de production d'un article moulé selon une quelconque revendication précédente, dans lequel l'antioxydant phénolique est représenté par l'un des composés suivants :

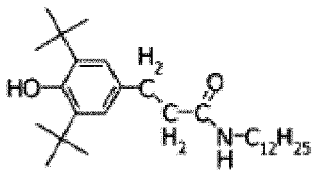
Composé n° 1

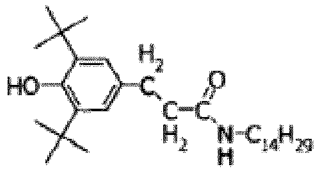
Composé n° 2

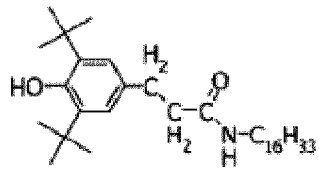
Composé n° 3

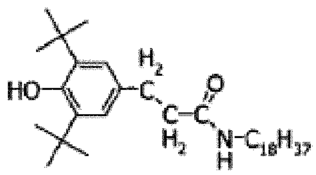
Composé n° 4

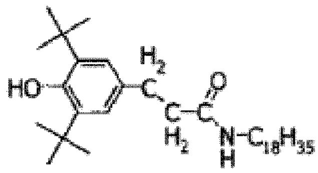
Composé n° 5

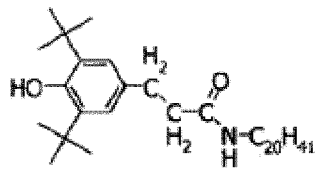
Composé n° 6

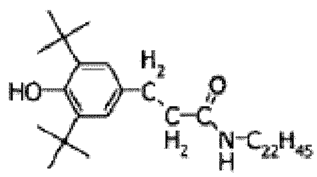
Composé n° 7

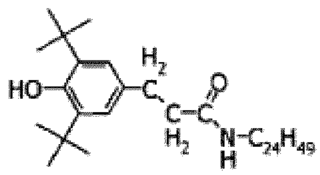
Composé n° 8

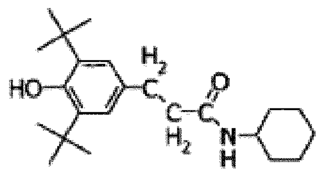
Composé n° 9

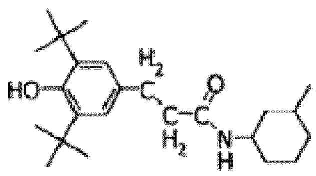
Composé n° 10

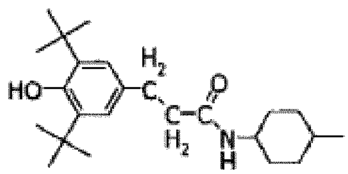
Composé n° 11

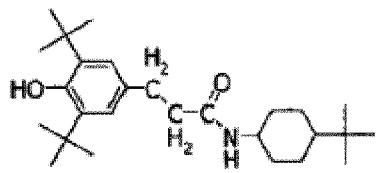
Composé n° 12

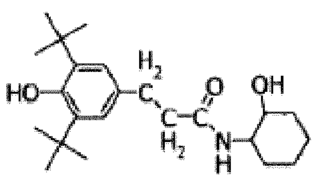
Composé n° 13

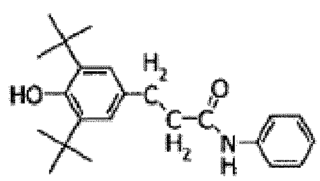
Composé n° 14

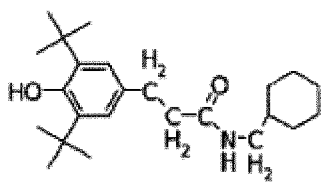
Composé n° 15

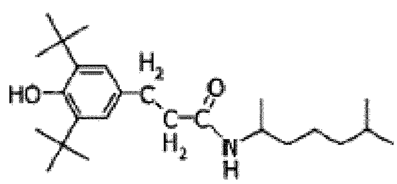
Composé n° 16

7. Procédé de production d'un article moulé selon une quelconque revendication précédente, dans lequel l'antioxydant à base de phosphore est choisi parmi l'un des composés suivants : phosphite de triphényle, phosphite de trisnonylphényle, phosphite de tris(2,4-di-tert-butylphényle), phosphite de tris(2,4-di-tert-butyl-5-méthylphényle), phosphite de tris[2-tert-butyl-4-(3-tert-butyl-4-hydroxy-5-méthylphénylthio)-5-méthylphényle], phosphite de tridécyle, phosphite d'octyldiphényle, phosphite de di(décyl)monophényle, diphosphite de di(tridécyl)pentaérythritol, diphosphite de di(nonylphényl)pentaérythritol, diphosphite de bis(2,4-di-tert-butylphényl)pentaérythritol, diphosphite de bis(2,6-di-tert-butyl-4-méthylphényl)pentaérythritol, diphosphite de bis(2,4,6-tri-tert-butylphényl)pentaérythritol, diphosphite de bis(2,4-dicumylphényl)pentaérythritol, diphosphite de tétra(tridécyl)isopropylidènediphénol, diphosphite de tétra(tridécyl)-4,4'-n-butylidène-bis(2-tert-butyl-5-méthylphénol), triphosphite de hexa(tridécyl)-1,1,3-tris(2-méthyl-4-hydroxy-5-tert-butylphényl)butane, diphosphonite de tétrakis(2,4-di-tert-butylphényl)biphénylène, 9,10-dihydro-9-oxa-10-phosphaphénanthrène-10-oxide, phosphite de 2,2'-méthylènebis(4,6-di-tert-butylphényl)-2-éthylhexyle, phosphite de 2,2'-méthylènebis(4,6-di-tert-butylphényl)-octadécyle, fluorophosphite de 2,2'-éthylidènebis(4,6-di-tert-butylphényle), tris(2-[(2,4,8,10-tétrakis-tert-butyldibenzo[d,f][1,3,2]dioxaphosphépin-6-yl)oxy]éthyl)amine, et phosphite de 2-éthyl-2-butylpropylène glycol et 2,4,6-tri-tert-butylphénol, de préférence phosphite de tris(2,4-di-tert-butylphényle).

8. Procédé de production d'un article moulé selon une quelconque revendication précédente, dans lequel le monomère d'oléfine est choisi parmi l'un des suivants : éthylène, propylène, 1-butène, 1-hexène, 3-méthyl-1-butène, 3-méthyl-1-pentène, 4-méthyl-1-pentène, vinylcycloalcane, styrène et des dérivés de ces monomères.

9. Procédé de production d'un article moulé selon une quelconque revendication précédente, dans lequel ladite composition de résine d'oléfine obtenue par la polymérisation est malaxée en fusion pour être granulée et moulée à l'aide d'une extrudeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2682410 A1
- WO 2011027793 A1
- JP 2011052177 B
- EP 2392615 A1
- EP 1857468 A1
- JP H543745 B
- JP H07188472 B
- JP H5209095 B
- JP 2007231036 A
- JP H912786 B
- JP 2000198886 A